# EUROPÄISCHE PATENTANMELDUNG

(11) **EP 0 938 146 A2**
(43) Veröffentlichungstag der Anmeldung: **25.08.1999**
(21) Anmeldenummer: 99103432.3
(22) Anmeldetag: 23.02.1999
(51) Int. Cl.: H01M 2/28, H01M 2/20, H01M 2/12, H01M 4/73, H01M 10/12

(54) **Wiederaufladbare Batterie**

(30) Priorität: 24.02.1998 DE 19807706
(71) Anmelder: HAGEN Batterie AG, D-59494 Soest (DE)
(72) Erfinder: Schermann, Dietolf, 85375 Neufahrn (DE)
(74) Vertreter: Manitz, Finsterwald & Partner

(57) **Zusammenfassung**

Die Erfindung betrifft eine wiederaufladbare Batterie mit in einem Kasten (11) unter Zwischenschaltung eines Separators (12, 12') angeordneten, abwechselnd positiven und negativen, pastierten Metall-Gitterplatten (13, 14), die insbesondere aus Blei oder einer Bleilegierung bestehen, wobei die positiven und negativen Gitterplatten (13, 14) an wenigstens einem Rand Anschlußfahnen (17, 18) besitzen sowie über diese jeweils elektrisch miteinander und mit wenigstens einem nach außen ragenden positiven bzw. negativen Pol (15, 16) verbunden sind.
Erfindungsgemäß ist hierbei vorgesehen, daß die an den Gitterplatten (13, 14) vorgesehenen Anschlußfahnen (17, 18) dicht aus einer Seite des Kastens (11) herausgeführt sind und an der betreffenden Seite des Kastens (11) eine Abdeckung (19, 19', 19'', 19''') vorgesehen ist, die die nach außen ragenden Pole (15, 16) und Leiterbahnen (23, 23') enthält, welche derart angeordnet und mit den aus dem Kasten (11) herausgeführten Anschlußfahnen (17, 18) elektrisch verbunden sind, daß an den Polen (15, 16) eine gewünschte Spannung anliegt.

## Beschreibung

Die Erfindung betrifft eine wiederaufladbare Batterie nach den Oberbegriffen der Ansprüche 1, 13 und 26. Der Kasten einschließlich Deckel und Boden soll zumindest im wesentlichen aus Isoliermaterial bestehen.

Bei der Produktion, insbesondere von Industriebatterien besteht das Problem, daß zahlreiche verschiedene Batterietypen zur Verfügung stehen müssen und somit eine umfassende Lagerhaltung erforderlich ist. Gleichwohl kommt es vor, daß bestimmte Batterietypen vergriffen sind und lange Lieferzeiten auftreten. Zudem besteht ein Nachteil der bekannten Batterien, die viel Blei oder Bleilegierungen enthalten, darin, daß sie ein hohes Gewicht haben.

Das Ziel der Erfindung besteht darin, eine wiederaufladbare Batterie der eingangs genannten Gattung zu schaffen, welche mit geringem Aufwand die Realisierung unterschiedlicher Batterietypen gestattet und außerdem ein reduziertes Gewicht aufweist.

Eine erste Lösung dieser Aufgabe ist durch die Merkmale des kennzeichnenden Teils des Anspruches 1 definiert. Sofern - wie allgemein üblich - der Kasten der Batterie in mehrere Zellen unterteilt ist, deren gleichpolige Gitterplatten parallel geschaltet sind, sieht die Erfindung bevorzugt eine Ausbildung nach Anspruch 2 vor.

Danach ist der Erfindungsgedanke darin zu sehen, daß auf die sonst üblichen und in erster Linie aus Blei bestehenden Polbrücken im Innern des Kastens verzichtet wird, indem die Anschlußfahnen der Gitterplatten zunächst aus dem Kasten herausgeführt und erst außerhalb desselben in der erforderlichen Weise elektrisch miteinander verbunden werden. In der erfindungsgemäß vorgesehenen Abdeckung, die zumindest im wesentlichen aus Isoliermaterial besteht, können die verschiedensten Leiterbahnanordnungen untergebracht sein, wodurch die im Kasten befindlichen Gitterplatten in jeder gewünschten Weise miteinander verschaltet werden können. Als besonders vorteilhaft erweist es sich dabei, daß, weil die Leiterbahnen sich außerhalb des auch die verdünnte Schwefelsäure enthaltenden Innenraum des Kastens befinden, keine säurebeständigen Metalle wie Blei verwendet werden müssen. Bevorzugt bestehen die Leiterbahnen aus gut leitendem Metall, wie beispielsweise Kupfer.

Aufgrund der erfindungsgemäßen Ausbildung können auf ein- und denselben, Gitterplatten enthaltenden Kasten Abdeckungen mit unterschiedlichem Leiterbahnenverlauf aufgesetzt werden, wodurch verschiedene Batterietypen realisiert werden können. Es müssen also nur noch wenige, Gitterplatten enthaltende Kastenanordnungen auf Lager gehalten werden, auf die dann die verschiedensten Abdeckungen aufgesetzt werden können. Eine umfassende Lagerhaltung von Abdeckungen mit unterschiedlichen Leiterbahnanordnungen ist wesentlich weniger aufwendig als das Lagern ganzer Batterien unterschiedlicher Ausführung. Der weitgehende Verzicht auf Blei in den Abdeckungen erweist sich als besonders vorteilhaft, weil die Abdeckungen dadurch relativ leicht und wesentlich einfacher zu handhaben sind als ganze Batterien. Auch die fertigen Batterien sind deutlich leichter.

Auch die Herstellung der Abdeckungen ist im Vergleich zur Fertigung einer ganzen Batterie wesentlich einfacher und weniger zeitaufwendig, so daß selbst für den Fall, daß ein bestimmter Abdeckungstyp aufgebraucht sein sollte, eine Neuherstellung wesentlich unproblematischer vonstatten geht, als wenn ein gesamter Batterietyp neu gefertigt werden müßte.

Besonders bevorzugte praktische Realisierungen des Erfindungsgedankens entnimmt man den Ansprüchen 3 bis 5.

Die runde Ausbildung der Anschlußfahnen hat dabei in erster Linie den Zweck, ein dichtes Vergießen der durch den Deckel des Kastens nach außen geführten Anschlußfahnen zu gewährleisten. Besonders wichtig ist auch, daß die aus Blei oder einer Bleilegierung bestehenden Anschlußfahnen unmittelbar oberhalb des Deckels des Kastens mit einem nicht aus Blei oder Bleilegierung bestehenden Anschlußstück aus gut leitendem Metall, wie Kupfer verbunden werden, welches dann in geeigneter Weise mit dem ebenfalls aus gut leitendem Metall, insbesondere Kupfer bestehenden Leiterbahnen der Abdeckung verbunden wird. Diese Verbindung kann durch Hartlöten oder Schweißen erfolgen, wobei zur Erhitzung der Verbindungsstellen entweder Strom oder chemische Mittel verwendet werden. Es wird also in erster Linie eine chemische Verschweißung unter Verwendung einer geeigneten Lotpaste durchgeführt. Die Verbindung der Leiterbahnen mit den Anschlußstücken kann aber auch durch mechanische Verbindung oder hohen Druck erfolgen.

Die Erfindung läßt sich aber auch bei Batterien anwenden, wo die einzelnen gleichpoligen Gitterplatten im Innern des Kastens durch aus Blei oder Bleilegierungen bestehende Polbrücken elektrisch leitend miteinander verbunden sind. In diesem Fall wird nach Anspruch 6 vorgegangen.

Eine derartige Batterie ist zwar etwas schwerer, als wenn die Anschlußfahnen der einzelnen Gitterplatten unmittelbar nach außen geführt werden. Der Vorteil der universellen Zur-Verfügung-Stellung von verschiedenen Batterietypen allein durch Auswechseln der Abdeckung bleibt jedoch auch bei dieser Ausführungsform erhalten, da die gleichpoligen Gitterplatten der einzelnen Zellen normalerweise bei jedem Batterietyp parallel geschaltet sind.

Die Weiterbildung nach Anspruch 7 hat den Vorteil, daß sich so gut wie kein flüssiger freier Elektrolyt in den Zellen befindet. Für die Erfindung ist es weiter vorteilhaft, wenn die Anschlußfahnen der positiven und negativen Gitterplatten räumlich möglichst weit voneinander entfernt sind, um bei der Verschaltung Kurzschlüsse zu vermeiden. Es sind lediglich zwei Kastenanordnungen erforderlich, um Batterien mit maximalen Spannungen von 12 bzw. 24 Volt zu realisieren. Weiter sind Maßnahmen angegeben, um Batterien mit geringeren Spannungen von beispielsweise 2 und 6 bzw. 6 und 12 V zu erhalten. Die Abdeckung kann auch auf der Oberseite des Kastens vorgesehen sein.

Aufgrund der erfindungsgemäßen Ausbildung ist es aber nach Anspruch 8 auch möglich, eine Abdeckung oben und eine unten am Kasten anzuordnen und/oder Entgasungsöffnungen vorzusehen.

Ein weiterer Erfindungsgedanke besteht darin, die Gitterplatten gemäß Anspruch 9 auszubilden. Durch die wellenförmige Anordnung der aktiven Masse um die Gitterstäbe herum wird eine besonders kompakte und elektrisch hochwirksame Gesamtanordnung erzielt.

Aufgrund der Ausbildung nach Anspruch 10 kann die erfindungsgemäße Batterie sehr kostengünstig produziert werden, weil nur ein Gitterplattentyp produziert werden muß. Auf diese Weise stecken zwar in den positiven Gitterplatten erhebliche Leistungsreserven, die aber für die Qualität der Batterie von Vorteil sind.

Die äußere Form der Batterien kann entweder so ausgeführt sein, daß zum Aufstellen und Verbinden mehrerer Batterien ein Übereinanderstapeln und Nebeneinander-Einklinken mit einem Belüftungsabstand von ca. 10 mm vorgesehen wird. Man könnte in den Batteriekästen auch lediglich Einbuchtungen vorsehen, in welche Zusammenbau-Abstands-Profilrahmen eingreifen und die gleiche Funktion als getrenntes, z.B. aus Kunststoff bestehendes Bauteil übernehmen. Diese Ausbildung der Batteriegehäuse ist besonders für die stationäre Anwendung geeignet.

Bei der Anwendung im Fahrzeugbereich müßten wegen des dort erforderlichen Einbaus in einen Trog der positive und negative Pol an einer seitlichen Deckelseite vorgesehen werden.

Die Polendanschlüsse der Batterie sollten wahlweise oben oder seitlich am Deckel (Schmalseite) mit herausgeführtem isolierten flexiblen Anschlußkabel versehen werden. Diese Anschlußkabel können z.B. mit isolierten Steckklemmen versehen sein. Es ist auch möglich, ein Anschlußkabel, z.B. das für die negative Spannung, flexibel und einen Anschlußendpol, z.B. den positiven Pol, ohne Kabel am Deckel zu fixieren, und zwar bevorzugt derart, daß der flexible negative Kabelanschluß einer benachbarten, gleich gestalteten Batterie aufgenommen werden kann.

Die Erfindung wird im folgenden beispielsweise anhand der Zeichnung beschrieben; in dieser zeigt
- Fig. 1: einen schematischen Querschnitt durch zwei benachbarte Zellen einer erfindungsgemäßen Batterie nach Linie I-I in Fig. 7,
- Fig. 2: eine rein schematische Schnittansicht nach Linie II-II in Fig. 1,
- Fig. 3: eine rein schematische Schnittansicht nach Linie III-III in Fig. 1,
- Fig. 4: eine rein schematische, vergrößerte Ausschnitt-Schnittansicht nach Linie IV-IV in Fig. 3,
- Fig. 5: eine schematische vergrößerte Schnittansicht nach Linie V-V in Fig. 3,
- Fig. 6: einen schematischen Längsschnitt einer mit sechs Zellen arbeitenden Ausführungsform der erfindungsgemäßen Batterie,
- Fig. 7: einen schematischen Horizontal-Schnitt nach Linie VII-VII in Fig. 6,
- Fig. 8: einen Fig. 7 entsprechenden Horizontal-Schnitt einer weiteren Ausführungsform einer erfindungsgemäßen Batterie mit insgesamt 12 Zellen,
- Fig. 9: einen schematischen Längsschnitt analog Fig. 3 durch eine Zelle einer weiteren Ausführungsform einer erfindungsgemäßen Batterie mit einer oberen und einer unteren Abdeckung, die
- Fig. 10 bis 12: schematische Draufsichten dreier verschiedener Abdeckungen mit verschiedenen Leiterbahnverlängerungen, wie für eine Batterie nach den vorangehenden Figuren geeignet sind,
- Fig. 13: einen stark schematisierten Schnitt analog Fig. 1 durch zwei Zellen einer weiteren Ausführungsform einer erfindungsgemäßen Batterie, die
- Fig. 14 bis 16: drei Abdeckungen mit unterschiedlichen Leiterbahnverlängerungen für die Batterie nach Fig. 13 und die
- Fig. 17, 18: jeweils drei übereinandergestapelte, hintereinandergeschaltete Batterien gemäß der Erfindung in zwei senkrecht aufeinander stehenden Seitenansichten.

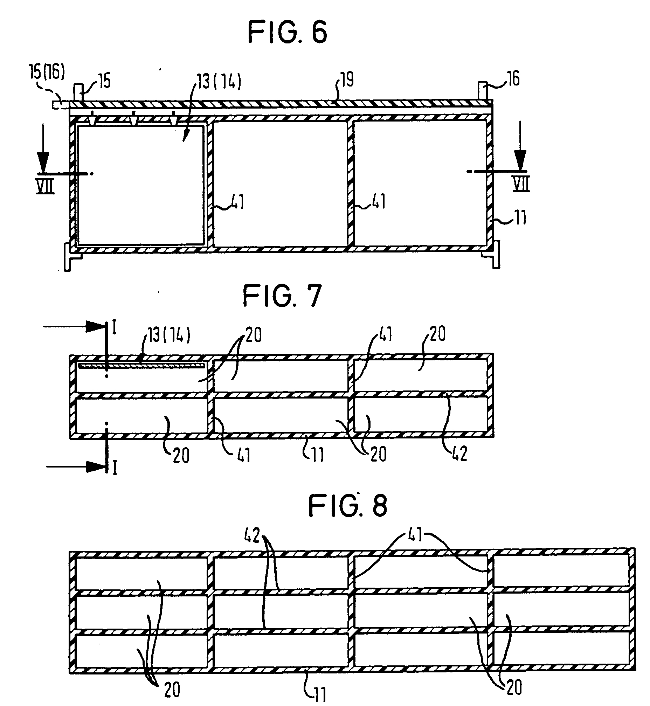

Nach den Fig. 6 und 7 weist eine Bleibatterie einen aus Isoliermaterial bestehenden quaderförmigen Kasten 11 mit rechteckigem Horizontalquerschnitt auf, welcher durch Querwände 41 und Längswände 42 in insgesamt sechs Zellen 20 unterteilt ist, welche ihrerseits einen rechteckigen Horizontalquerschnitt besitzen und von denen jeweils zwei mit ihren langen Seiten und drei mit ihren Schmalseiten aneinandergrenzend angeordnet sind. In den Zellen 20 befinden sich Plattenpakete aus in Fig. 6 und 7 nur angedeuteten positiven und negativen Gitterplatten 13, 14. Im oberen Bereich des Kastens 11 sind der positive und der negative Pol 15, 16 der Batterie vorgesehen.

Fig. 8 zeigt einen Horizontalschnitt eines weiteren Batterietyps mit jeweils drei nebeneinander und vier hintereinander angeordneten also insgesamt 12 Zellen 20.

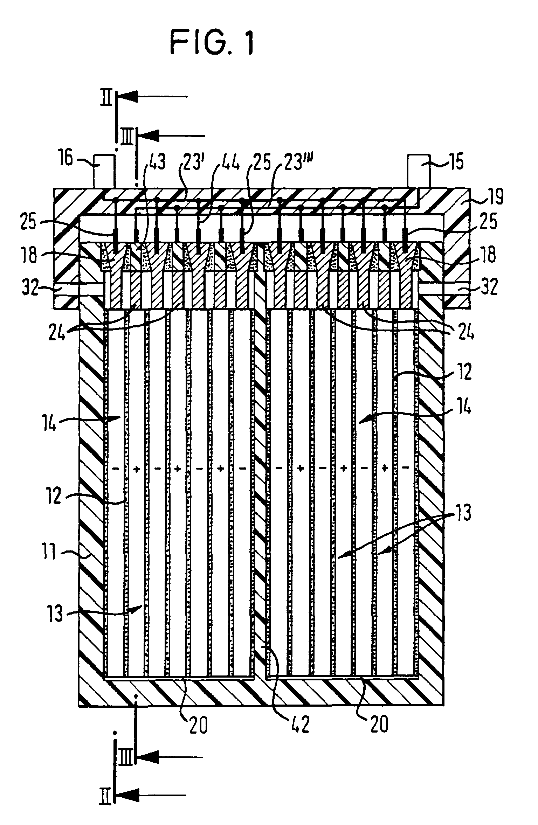

Der genaue Aufbau der einzelnen Zellen 20 wird im folgenden anhand der Fig. 1 bis 5 beschrieben.

In jeder Zelle 20 sind abwechselnd positive Gitterplatten 13 und negative Gitterplatten 14 unter Zwischenschaltung jeweils eines flächigen Separators 12 raumfüllend untergebracht. Pro Zelle sind drei positive Gitterplatten 13 und vier negative Gitterplatten 14 vorgesehen. Die Plattendicke beträgt ca. 4 mm, die Plattenhöhe ca. 180 mm und die Plattenbreite ca. 160 mm. Die Platten bestehen aus Blei oder einer Bleilegierung, während es sich bei den Elektrolyten in üblicher Weise um verdünnte Schwefelsäure handelt. Bei diesen Abmessungen kann in jeder Zelle 20 eine Kapazität von ca. 60 Ah untergebracht werden.

Die Batterie nach Fig. 6, 7 hat folgende Abmessungen:

| | |
|---|---|
| Länge | 580 mm |
| Breite | 95 mm |
| Höhe | 198 mm. |

Die Abmessungen der Batterie nach Fig. 8 betragen:

| | |
|---|---|
| Länge | 740 mm |
| Breite | 150 mm |
| Höhe | 198 mm. |

Die Plattendicke kann auch 2,5 mm betragen und die Kapazität 40 Ah. Eine diesbezüglich dimensionierte Batterie gemäß der Erfindung baut etwas kleiner und leichter, aber auch preiswerter.

Während die Plattendicken von positiven und negativen Gitterplatten grundsätzlich gleich sein können, kann das Plattendickenverhältnis zwischen positiven Gitterplatten 13 und negativen Gitterplatten 14 sich auch wie 1,0 : 1,4 verhalten. Bei gleichen Plattendicken wären in der positiven Gitterplatte 13 erhebliche Leistungsreserven, die allerdings für die Qualität der Batterie gut wären. Herstellungstechnisch ist es auf jedoch von Vorteil, wenn positive und negative Gitterplatten 13, 14 gleich ausgebildet sind.

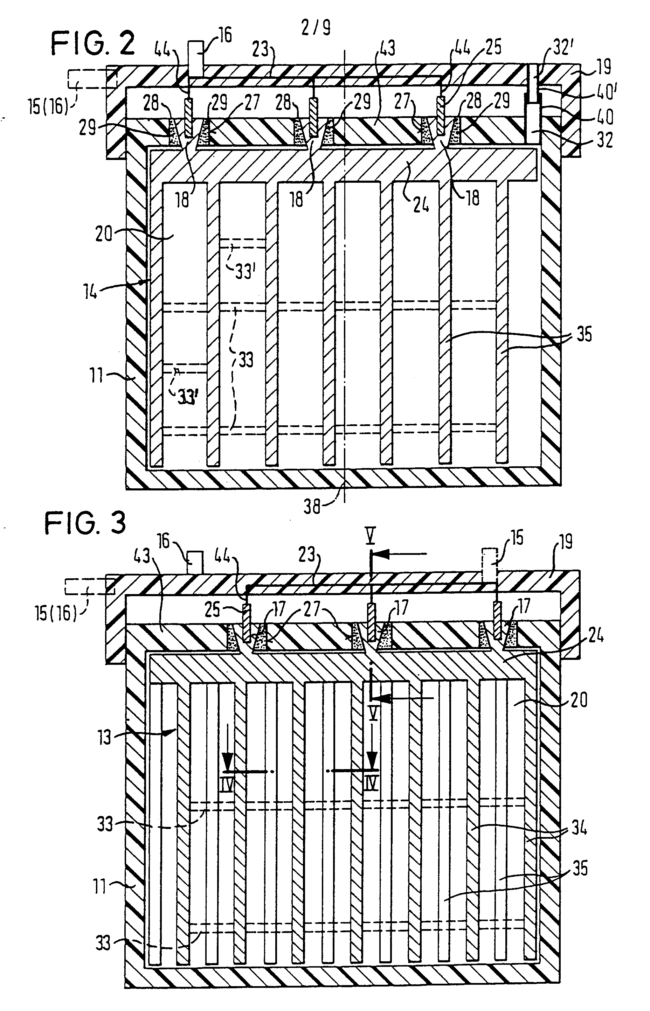

Wie man insbesondere aus den Fig. 2, 3 und 4 entnimmt, bestehen die Gitterplatten 13, 14 aus Rundstäben 34 bzw. 35 mit einem Durchmesser von ca. 4 mm. Die Rundstäbe 34, 35 sind in einem Abstand von ca. 7 mm an der Unterseite einer Längsleiste 24 angeordnet. Es können in gleichmäßigen Abständen an jeder Längsleiste 24 sieben bis neun Rundstäbe 34 bzw. 35 vorgesehen sein. Im unteren und mittleren Bereich sind die Rundstäbe 34, 35 zweckmäßig durch senkrecht zu ihnen verlaufende Längsverbinder 33 miteinander verbunden. Dadurch wird der Halt für die einpastierte Masse bis zur Eintaschung der Platten verbessert. Um diesen Halt noch weiter zu intensivieren, können auch zwischen der Längsleiste 24 und den Längsverbindern 33 zusätzliche Längsverbinder 33' vorgesehen sein, wie das in Figur 2 links anhand von nur zwei benachbarten Rundstäben 35 veranschaulicht ist.

Nach den Fig. 2 und 3 ist die Anbringung der Stäbe 34, 35 an der Längsleiste 24 relativ zur vertikalen Mittelachse 38 der Zelle 20 derart unsymmetrisch, daß bei Verschwenkung der Gitterplatte 14 nach Fig. 2 um 180° um die Mittelachse 38 die Anordnung nach Fig. 3 entsteht, bei der die Rundstäbe 34 gegenüber den Rundstäben 35 nach Fig. 2 um eine halbe Teilung versetzt sind.

Auf diese Weise können mit ein- und demselben Gitterplattentyp eine positive Gitterplatte 13 mit positiven Stäben 34 und eine negative Gitterplatte 14 mit Stäben negativen 35 realisiert werden.

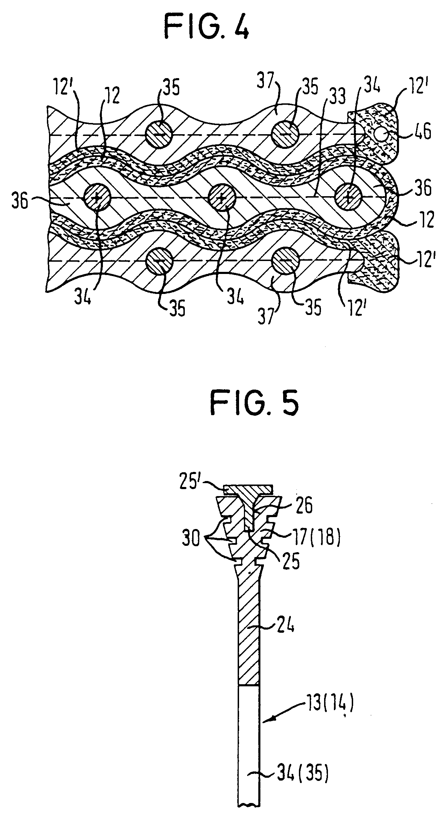

Nach Fig. 4 ist um die positiven Stäbe 34 herum wellenförmig eine positive aktive Masse 36 eingewalzt, während um die negativen Stäbe 35 herum entsprechend wellenförmig die negative aktive Masse 37 aufgewalzt ist.

Die einzelnen Gitterplatten 13, 14 sind jeweils in Vliestaschen 12, 12' eingesetzt, derart, daß die beiden Vliestaschen 12, 12' nach Fig. 4 die Separatoren zwischen den aktiven Massen 36 und 37 bilden. Aufgrund der erfindungsgemäßen Versetzung der positiven und negativen Stäbe 34 bzw. 35 befindet sich dort, wo die positive aktive Masse 36 einen Wellenberg aufweist ein Wellental der negativen aktiven Masse 37 und umgekehrt.

An den Enden der Gitterplatten sind die Vliestaschen geschlossen, wie das rechts in Figur 4 zu erkennen ist. Der an den Enden der Platten verbleibende Hohlraum wird somit auch mit dem verstärkten Vlies zumindest weitgehend ausgefüllt. Es steht hier also ein weiteres Säure- und Feuchtigkeitsreservoir zur Verfügung, in dem auch ein in Figur 4 angedeuteter Indikator wie eine Meßsonde 46 zur Ermittlung von Dichte und Feuchtigkeit untergebracht sein kann.

Nach den Fig. 1 bis 3 und 5 erstrecken sich von jeder Längsleiste 24 nach oben positive bzw. negative Anschlußfahnen 17 bzw. 18, welche einen kreisrunden Querschnitt aufweisen und am Übergang zur Längsleiste 24 einen Durchmesser besitzen, der der Dicke der Längsleiste 24 entspricht (Fig. 5). Die Anschlußfahnen 17, 18 erweitern sich nach oben konisch und besitzen an ihrem Umfang Profilierungen 30.

Zentral besitzen die Anschlußfahnen 17, 18 auf ihrer von der Längsleiste 24 abgewandten Seite nach Fig. 5 eine axiale Vertiefung 26, in der ein stabförmiges Anschlußstück 25 angeordnet ist.

Während die Gitter 13, 14 einschließlich der Längsleiste 24 und der Anschlußfahnen 17, 18 aus Blei oder einer Bleilegierung bestehen, sollen die Anschlußstücke 25 aus einem gut leitendem Metall wie Kupfer bestehen. Durch ein Querstück 25' an der Oberseite des Anschlußstückes 25 kann die im folgenden beschriebene Kontaktgabe zu zugeordneten Leiterbahnen begünstigt werden.

Nach den Fig. 1 bis 3 sind die Anschlußfahnen 17, 18 durch Öffnungen 27 im Deckel 43 des Kastens 11 hindurchgeführt. Der Spalt 28 zwischen den Anschlußfahnen 17, 18 und dem Innenrand der Öffnungen 27 ist mit einer Vergußmasse 29 ausgefüllt, derart, daß die Durchführung der Anschlußfahnen 17, 18 durch den Deckel 43 absolut flüssigkeits- und gasdicht ist. Oberhalb des Deckels 42 stehen somit die stabförmigen Anschlußstücke 25 aus Kupfer nach oben vor.

Erfindungsgemäß ist auf die Oberseite des Kastens 11 eine deckelartig ausgebildete Abdeckung 19 aufgesetzt, welche einen gewissen Abstand vom eigentlichen Deckel 43 aufweisen kann. Im Innern des Deckels 19 bzw. auf seiner Innenseite sind vorzugsweise aus Kupfer bestehende Leiterbahnen 23 angeordnet, von denen sich im Bereich der Anschlußstücke 25 Kontaktstücke 44 in Richtung der Anschlußstücke 25 erstrecken und mit diesen in elektrischen Kontakt stehen. Der Kontakt kann durch chemische Verschweißung, mechanisches Einrasten oder Einpressen oder hohen Druck hergestellt werden.

Die Leiterbahnen 23 innerhalb der Abdeckung 19 verbinden die verschiedenen Gitterplatten 13, 14 der einzelnen Zellen 20 nach einem gewünschten Schema und führen die abgenommenen Spannungen bzw. Ströme zu einem positiven und negativen Pol 15 bzw. 16, die sich von der Abdeckung 19 nach oben erstrecken. Da der Pol 15 im Schnitt nach Figur 3 an sich nicht zu erkennen ist, wurde er, um die Verbindung zu den Rundstäben 34 zu veranschaulichen, dennoch rechts oben gestrichelt dargestellt.

Außerdem sind am linken Rand der Abdeckung 19 nach den Figuren 2 und 3 gestrichelt zwei weitere mögliche Anordnungen der Pole 15 bzw. 16 gestrichelt veranschaulicht, welche bei einem senkrechten Einbau der Batterie in Tröge für Staplerbatterien zur Anwendungen kommen können.

Nach Fig. 1 befinden sich im oberen Bereich der Seitenwände des Kastens 11 Entgasungsöffnungen 32, durch die hindurch ein Druckausgleich zwischen dem Inneren der Zellen 20 und der umgebenden Atmosphäre stattfinden kann. Da erfindungsgemäß die verdünnte Schwefelsäure innerhalb der Zellen 20 durch die Vliestaschen 12, 12' gebunden ist oder in Form eines Gels vorliegt, besteht keine Gefahr, daß aus den Entgasungsöffnungen 32 Flüssigkeit nach außen tritt.

Fig. 2 zeigt eine weitere Möglichkeit für die Entgasung des Innenraums der Zellen 20. In diesem Fall ist im Deckel 43 des Kastens 11 eine Entgasungsöffnung 32 vorgesehen, die in ein Rohr 40 übergeht, in welches teleskopartig ein weiteres Rohr 40' dicht eingreift, des an eine durchgehende Bohrung 32' in der Abdeckung 19 angeschlossen ist. Die dichte Verbindung zwischen den Rohren 40, 40' wird bei Aufsetzen der Abdeckung 19 auf den Kasten 11 automatisch herbeigeführt.

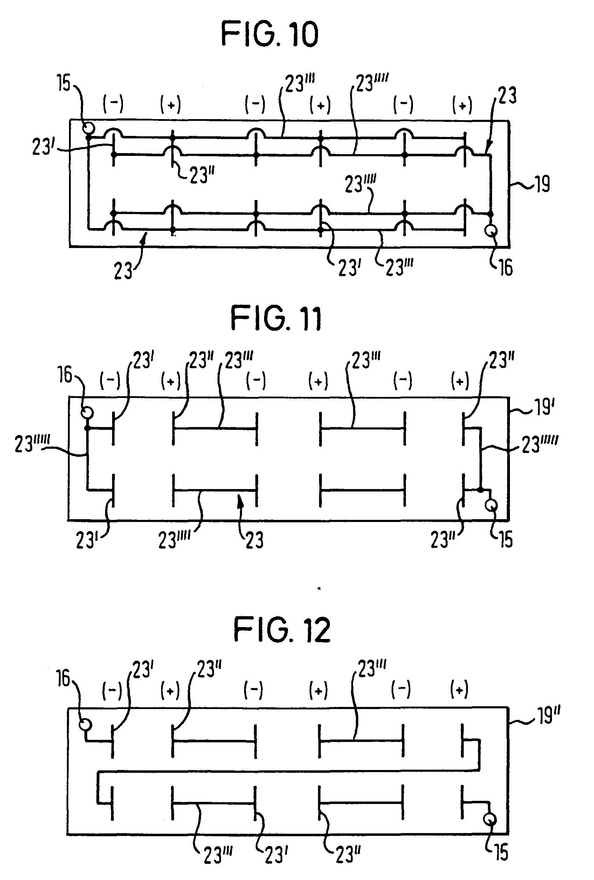

Fig. 10 zeigt eine erste erfindungsgemäße Anordnung der Leiterbahnen 23 in der Abdeckung 19. Der Einfachheit halber sei angenommen, daß sich im Gegensatz zu der Darstellung in den Fig. 2, 3 an der Oberseite jeder Gitterplatten 13, 14 jeweils nur eine einzige Anschlußfahne 17 bzw. 18 befindet. Die diesbezüglichen Anschlußfahnen 17, 18 gleichpoliger Platten 13, 14 einer Zelle 20 sind durch quer verlaufende Leiterbahnen 23', 23'' miteinander elektrisch leitend verbunden.

Durch weitere Leiterbahnen 23''' und 23'''' sind sämtliche gleichpoligen Anordnungen von Gitterplatten 13, 14 parallel geschaltet. Die die Parallelschaltung herbeiführenden Leiterbahnen 23''' und 23'''' sind zum positiven Pol 15 bzw. zum negativen Pol 16 der Abdeckung 19 geführt. Auf diese Weise weist eine gemäß Fig. 6, 7 aufgebaute Batterie eine Spannung von 2 V und eine Kapazität von 360 Ah auf.

Die Ausführungsform nach Fig. 11 zeigt eine Abdeckung 19' mit die einzelnen Anschlußfahnen 17, 18 einer Zelle 20 elektrisch verbindenden Leiterbahnen 23' und 23''. Während die Zellen der oberen und unteren Hälfte des Kastens 11 nach Fig. 7 durch Leiterbahnen 23''' bzw. 23 '''' elektrisch hintereinander geschaltet sind, sind diese beiden Hintereinanderschaltungen durch Leitungen 23''''' parallel geschaltet. Die Leitungen 23''''' sind zum positiven Pol 15 bzw. negativen Pol 16 geführt, wo nunmehr eine Spannung von 6 V anliegt. Die Gesamtkapazität der Batterie beträgt in diesem Falle 120 Ah.

Nach Fig. 12 sind in einer Abdeckung 19'' sämtliche Paare von Leiterbahnen 23', 23'' durch Leiterbahnen 23''' hintereinandergeschaltet. Auf diese Weise liegt an den Polen 15, 16 eine Spannung von 12 V an und die Gesamtkapazität der Batterie beträgt 60 Ah.

Die Fig. 10 bis 12 zeigen also drei bevorzugte Verschaltungen der einzelnen Gitterplatten 13, 14. Es lassen sich aber auch durch andere Führungen der Leiterbahnen weitere Zusammenschaltungen der einzelnen Gitterplatten realisieren.

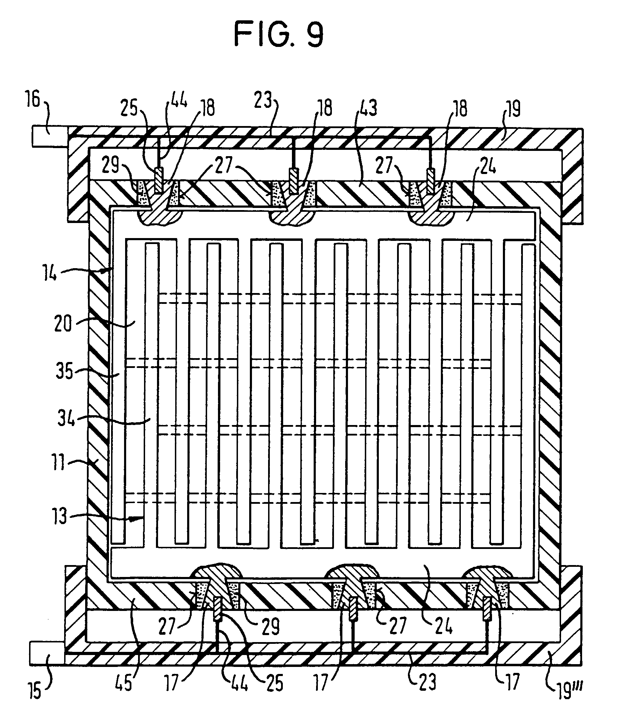

Nach Fig. 9, in der gleiche Bezugszahlen entsprechende Bauelemente wie in den vorangehenden Figuren bezeichnen, sind die positiven Gitterplatten 13 umgekehrt wie die negativen Gitterplatten angeordnet, derart, daß die Längsleisten 24 der negativen Gitterplatten 14 oben und die Längsleisten 24der positiven Gitterplatten 13 unten zu liegen kommen. Durch entsprechende Verdrehung der beiden Gitterplatten 13, 14 um die Mittelachse 38 (Fig. 2) wird wieder die um eine halbe Teilung versetzte Anordnung der Stäbe 34, 35 erzielt.

Während die negativen Anschlußfahnen 18 durch Öffnungen 27 im Deckel 43 dicht nach außen geführt sind, erstrecken sich die Anschlußfahnen 17 der unteren Längsleisten 24 der positiven Stäbe 34 nach unten durch entsprechende Öffnungen 27 im Boden 45 des Kastens 11. Unten ist entsprechend der oberen Abdeckung 19 eine untere Abdeckung 19''' vorgesehen.

An den Abdeckungen 19, 19''' sind seitlich die Pole 16 bzw. 15 angeordnet, zu denen die Leiterbahnen 23 innerhalb der Abdeckungen führen.

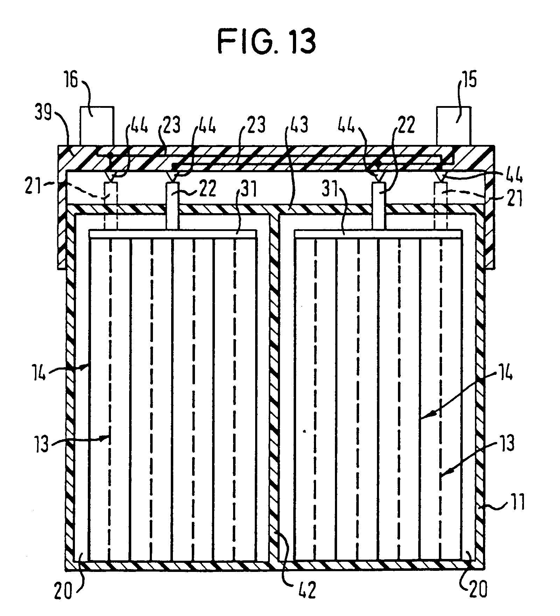

Bei der in Fig. 13 dargestellten Ausführungsformen, in der wieder gleiche Bezugszahlen entsprechende Bauelemente wie in den vorangehenden Ausführungsformen bezeichnen, sind die einzelnen Gitterplatten 13, 14 der Zellen 20 in üblicher Weise durch im Innern der Zellen 20 vorgesehene Polbrücken 31 elektrisch leitend verbunden. In Fig. 13 sind nur die Polbrücken 31 für die negativen Gitterplatten 14 zu erkennen geben. Die nur gestrichelt angedeuteten positven Gitterplatten 13 sind oben entsprechend durch nicht erkennbare Polbrücken elektrisch verbunden.

Von den negativen Polbrücken 31 und den nicht erkennbaren positiven Polbrücken erstrecken sich positive bzw. negative Anschlußklemmen 21 bzw. 22 durch den Deckel 43 des aus Isoliermaterial bestehenden Kastens 11 nach oben, wo sie mit Kontaktstücken 44 der Leiterbahnen 23 innerhalb der Abdeckung 39 in elektrischen Kontakt stehen.

Die mit den positiven Anschlußklemmen 21 verbundenen Leiterbahnen 23 führen zum positiven Pol 15, die mit den negativen Anschlußklemmen 22 verbundenen Leiterbahnen 23 zum negativen Pol 16.

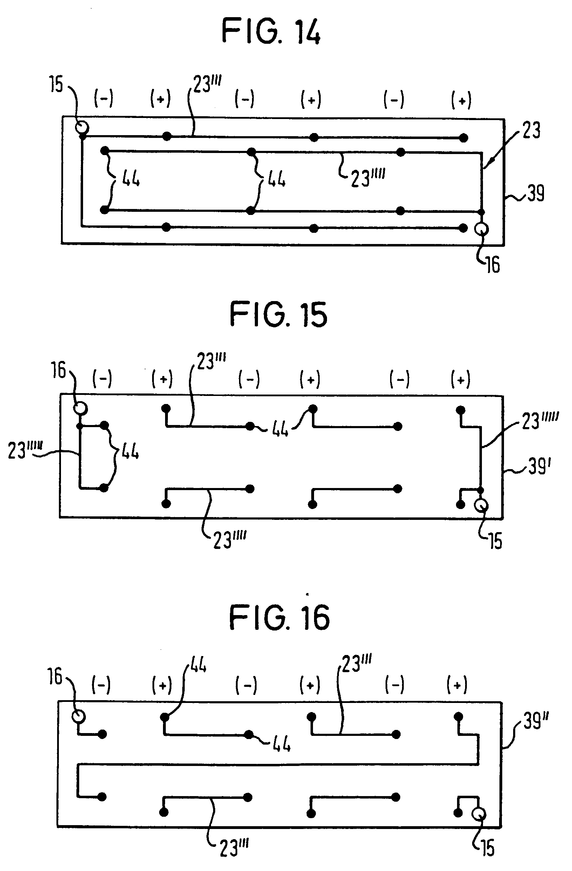

Aus den Fig. 14 bis 16 ergibt sich, daß auch beim Ausführungsbeispiel nach Fig. 13 durch unterschiedliche Abdeckungen 39, 39' bzw. 39 '' die gleichen Verschaltungen der einzelnen Zellen möglich sind wie bei den Ausführungsformen nach den Fig. 10 bis 12. Der Unterschied besteht lediglich darin, daß statt der Leiterbahnen 23', 23'' der Ausführungsbeispiele nach den Fig. 10 bis 12 die Abdeckungen 39, 39', 39'' lediglich die den Anschlußklemmen 21, 22 gegenüberliegenden Kontaktstücke 44 aufweisen, wodurch ein einfacher Leitungsverlauf in den Abdeckungen 39, 39', 39'' erzielt wird.

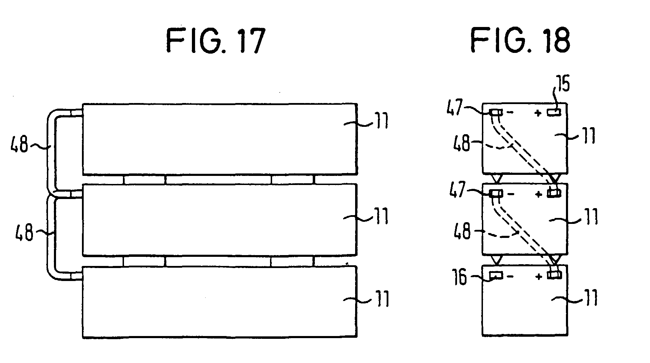

In Figur 6 links oben ist auch noch gestrichelt angedeutet, daß die Pole 15 bzw. 16 auch seitlich aus der Abdeckung 19 der Batterie herausgeführt werden können, um eine Stapelung mehrerer Batterien gemäß den Figuren 17 und 18 zu ermöglichen. Bei dieser Ausführungsform werden erfindungsgemäß die mit dem positiven Pol einer benachbarten Batterie zu verbindenden negativen Pole als eine feste Lasche 47 mit z.B. einer 8 mm-Bohrung und der positive Pol als flexible, vollisolierte Kabellasche 48 mit einer Länge von ca. 200 mm ausgebildet, um auf dem anschließenden negativen Pol (Lasche 47) zu der nächsten Batterie aufgeschraubt werden zu können.

Es ist sogar bevorzugt, daß die Pole der erfindungsgemäßen Batterie seitlich hinausgeführt sind, damit zum einen mehrere Batterien senkrecht aufeinander gestapelt werden können, ohne daß für die Pole ein Abstand in vertikaler Richtung zwischen den Batterien vorgesehen werden müßte.

Das Übereinanderstapeln der Batterien ist sowohl bei stationären Batterien (z.B. bei der Telekom oder im Mobilfunkbereich) als auch bei Staplern erwünscht. Die Batterien werden dabei senkrecht in einen Trog gestellt und über die seitlich an der Schmalseite herausragenden Plus- und Minuspole miteinander verschaltet. Dadurch ist die Übereinanderstapelung bei gleichzeitig kurzen elektrischen Verbindungen möglich.

### Bezugszeichenliste

- 11: Kasten
- 12: Separator (Vliestasche)
- 12': Separator (Vliestasche)
- 13: positive Gitterplatte
- 14: negative Gitterplatte
- 15: positiver Pol
- 16: negativer Pol
- 17: positive Anschlußfahne
- 18: negative Anschlußfahne
- 19: Abdeckung
- 19': Abdeckung
- 19'': Abdeckung
- 19''': Abdeckung
- 19'''': Abdeckung
- 20: Zelle
- 21: positive Anschlußklemme
- 22: negative Anschlußklemme
- 23: Leiterbahn
- 24: Längsleiste
- 25: Anschlußstück
- 25': Querstück
- 26: Vertiefung
- 27: Öffnung
- 28: Spalt
- 29: Vergußmasse
- 30: Profilierung
- 31: Polbrücke
- 32: Entgasungsöffnung
- 32': Bohrung
- 33: Längsverbinder
- 33': Längsverbinder
- 34: Stab positiver Polarität
- 35: Stab negativer Polarität
- 36: aktive Masse für die positiven Gitterplatten
- 37: aktive Masse für die negativen Gitterplatten
- 38: Mittelachse
- 39: Abdeckung
- 39': Abdeckung
- 39'': Abdeckung
- 40: Rohr
- 40': Rohr
- 41: Querwand
- 42: Längswand
- 43: Deckel
- 44: Kontaktstück
- 45: Boden
- 46: Meßsonde
- 47: Lasche (negativer Pol)
- 48: Kabellasche (positiver Pol)

## Patentansprüche

1. Wiederaufladbare Batterie mit in einem einen Elektrolyten, insbesondere verdünnte Schwefelsäure enthaltenden Kasten (11) unter Zwischenschaltung jeweils eines Separators (12, 12') angeordneten, abwechselnd positiven und negativen, pastierten Metall-Gitterplatten (13, 14), die insbesondere aus Blei oder einer Bleilegierung bestehen, wobei die positiven und negativen Gitterplatten (13, 14) an wenigstens einem, insbesondere dem oberen Rand Anschlußfahnen (17, 18) besitzen sowie über diese jeweils elektrisch miteinander und mit wenigstens einem nach außen ragenden positiven bzw. negativen Pol (15, 16) verbunden sind,
**dadurch gekennzeichnet,**
daß die an den Gitterplatten (13, 14) vorgesehenen Anschlußfahnen (17, 18) dicht aus einer Seite, vorzugsweise der Oberseite und/oder Unterseite des Kastens (11) herausgeführt sind und an der betreffenden Seite des Kastens (11) eine Abdeckung (19, 19', 19'', 19''') vorgesehen ist, die die nach außen ragenden Pole (15, 16) und vorzugsweise aus gut leitendem Metall, wie Kupfer bestehende Leiterbahnen (23, 23', 23'', 23''', 23'''', 23''''') enthält, welche derart angeordnet und mit den aus dem Kasten (11) herausgeführten Anschlußfahnen (17, 18) elektrisch verbunden sind, daß an den Polen (15, 16) eine gewünschte Spannung anliegt.

2. Batterie nach Anspruch 1, bei der der Kasten (11) in mehrere Zellen (20) unterteilt ist, deren gleichpolige Gitterplatten (13, 14) parallelgeschaltet sind,
**dadurch gekennzeichnet,**
daß die Parallelschaltung der gleichpoligen Gitterplatten (13, 14) durch entsprechend verlegte Leiterbahnen (23', 23'') außerhalb des Innenraums des Kastens (11) und insbesondere in oder an der Abdeckung (19) erfolgt und daß durch weitere Leiterbahnen (23''', 23'''', 23''''') in der Abdeckung (19, 19', 19'', 19''') die parallelgeschalteten, gleichpoligen Gitterplatten (13, 14) der einzelnen Zellen (20) so verschaltet sind, daß an den Polen (15, 16) die gewünschte Spannung anliegt.

3. Batterie nach Anspruch 1 oder 2,
**dadurch gekennzeichnet,**
daß die Gitterplatten (13, 14) auf der Seite der Anschlußfahnen (17, 18) vorzugsweise aus Blei oder einer Bleilegierung bestehende Längsleisten (24) aufweisen, von denen aus sich die vorzugsweise aus Blei oder einer Bleilegierung bestehenden Anschlußfahnen (17, 18) durch Öffnungen (27) in der zugeordneten Seite des Kastens (11) erstrecken.

4. Batterie nach einem der vorhergehenden Ansprüche,
**dadurch gekennzeichnet,**
daß die Anschlußfahnen (17, 18) einen runden Querschnitt aufweisen, wobei insbesondere der Durchmesser der Anschlußfahnen (17, 18) an der Stelle ihres Austritts aus der zugeordneten Gitterplatte (13, 14) bzw. der Längsleiste (24) zumindest im wesentlichen der Dicke der Gitterplatte (13, 14) bzw. der Längsleiste (24) entspricht, und vorzugsweise die Anschlußfahnen (17, 18) sich ausgehend von den Gitterplatten (13, 14) in Richtung von dieser weg vorzugsweise konusartig erweitern.

5. Batterie nach einem der vorhergehenden Ansprüche,
**dadurch gekennzeichnet,**
daß an den Anschlußfahnen (17, 18) vorzugsweise von der Außenseite her ein Anschlußstück (25) aus gut leitendem Metall wie insbesondere Kupfer angebracht ist, wobei insbesondere das Anschlußstück (25) in eine Vertiefung (26) der Anschlußfahnen (17, 18) eingesetzt und dort befestigt ist, und/oder daß die Anschlußfahnen (17, 18) jeweils durch eine Öffnung (25) in der zugeordneten Seite des Kastens (11) durchgeführt sind und der nach dem Einsetzen der Anschlußfahnen (17, 18) in die Öffnung (27) verbleibende Spalt (28) mit einer Vergußmasse (29) ausgegossen ist, wobei bevorzugt die Anschlußfahnen (17, 18) im Bereich der Öffnung (27) rundum mit den festen Halt in der Vergußmasse (29) begünstigenden Profilierungen (30) versehen sind, und/oder die Gitterplatten (13, 14) bzw. deren Längsleisten (24) mehr als eine Anschlußfahne (17, 18), insbesondere zwei bis vier Anschlußfahnen (17, 18) und bevorzugt drei Anschlußfahnen (17, 18) aufweisen, wobei vorzugsweise die Anschlußfahnen (17, 18) über die Länge des Randes gleichmäßig verteilt angeordnet sind.

6. Wiederaufladbare Batterie mit in einem einen Elektrolyten, insbesondere verdünnte Schwefelsäure enthaltenden Kasten (11) unter Zwischenschaltung jeweils eines Separators (12, 12') angeordneten, abwechselnd positiven und negativen, pastierten Metall-Gitterplatten (13, 14), die insbesondere aus Blei oder einer Bleilegierung bestehen, wobei die positiven und negativen Gitterplatten (13, 14) an wenigstens einem, insbesondere dem oberen Rand Anschlußfahnen (17, 18) besitzen sowie über diese jeweils elektrisch miteinander und mit wenigstens einem nach außen ragenden positiven bzw. negativen Pol (15, 16) verbunden sind, der Kasten (11) in mehrere Zellen (20) unterteilt ist, deren gleichpolige Gitterplatten (13, 14) parallelgeschaltet sind, die Parallelschaltung der Gitterplatten (13, 14) im Innern der Zellen (20) durch Polbrücken (31) erfolgt und pro Zelle eine positive und eine negative Anschlußklemme (21, 22) dicht nach außen geführt ist,
**dadurch gekennzeichnet,**
daß an der betreffenden Seite des Kastens (11) eine Abdeckung (39, 39', 39'') vorgesehen ist, die die nach außen ragenden Pole (15, 16) und Leiterbahnen (23''', 23'''', 23''''') enthält, welche derart angeordnet und mit den aus dem Kasten (11) herausgeführten Anschlußklemmen (21, 22) elektrisch verbunden sind, daß an den Polen (15, 16) eine gewünschte Spannung anliegt.

7. Batterie nach einem der vorhergehenden Ansprüche,
**dadurch gekennzeichnet,**
daß die Gitterplatten (13, 14) in die Separatoren bildenden Vliestaschen (12, 12') untergebracht sind, welche den flüssigen Elektrolyten, insbesondere verdünnte Schwefelsäure binden, und/oder daß als Elektrolyt, insbesondere verdünnte Schwefelsäure, ein Gel verwendet wird, und/oder daß die Anschlußfahnen (17, 18) unsymmetrisch zur Mitte (38) des zugeordneten Randes der Gitterplatten (13, 14) angeordnet sind, derart, daß durch relatives Verschwenken benachbarter Gitterplatten (13, 14) um 180° um die vertikale Mittelachse (38) Plattenpakete mit wenigstens zwei relativ zueinander versetzten Gruppen von Anschlußfahnen (17, 18) gebildet werden können, und/oder daß paarweise zwei oder drei Zellen (20) mit rechteckigem Horizontalquerschnitt, vorzugsweise mit ihrer langen Seite aneinandergrenzend nebeneinander und drei oder vier derartige Zellenanordnungen vorzugsweise mit ihren schmalen Seiten aneinander angrenzend zu einer Baueinheit mit rechteckigem Horizontalquerschnitt vereinigt sind, und/oder daß für jeden mit Gitterplatten (13, 14) bestückten Kasten (11) mehrere unterschiedliche Abdeckungen (19, 19', 19''; 39, 39', 39'') mit unterschiedlichem Leiterbahnverlauf vorgesehen sind, und/oder daß durch Leiterbahnen (23''', 23'''') in der Abdeckung (19, 19', 19'', 19''') alle Zellen (20) parallelgeschaltet sind oder daß durch Leiterbahnen (23''') alle Zellen (20) hintereinandergeschaltet sind oder daß durch Leiterbahnen (23'''''; 23''', 23'''') ein Teil der Zellen (20) parallel und ein anderer Teil der Zellen (20) hintereinandergeschaltet ist, und/oder daß die Abdeckung (19, 19', 19''; 39, 39', 39'') auf die Oberseite des Kastens (11) aufgebracht ist.

8. Batterie nach einem der Ansprüche 1 bis 7,
**dadurch gekennzeichnet,**
daß eine den einen Pol (15) aufweisende Abdeckung (19) an der Oberseite und eine den anderen Pol (16) aufweisende Abdeckung (19''') an der Unterseite des Kastens (11) vorgesehen ist und die Anschlußfahnen (17, 18) der einen Polarität oben, die der anderen Polarität unten aus dem Kasten (11) herausgeführt sind, und/oder daß von jeder Zelle (20) eine den Innenraum mit der umgebenden Atmosphäre verbindende Entgasungsöffnung (32) ausgeht, wobei insbesondere die Entgasungsöffnung (32) oben seitlich am Kasten (11) im Bereich jeder Zelle (20) angeordnet ist oder pro Zelle wenigstens eine Entgasungsöffnung (32) in der Oberseite des Kastens (11) vorgesehen ist, die mittels Rohren (40, 40') oder Schläuchen, die zu einer Bohrung (32') der Abdeckung (19) geführt sind, mit der umgebenden Atmosphäre verbunden sind.

9. Wiederaufladbare Batterie mit in einem einen Elektrolyten, insbesondere verdünnte Schwefelsäure enthaltenden Kasten (11) unter Zwischenschaltung jeweils eines Separators (12, 12') angeordneten, abwechselnd positiven und negativen, pastierten Metall-Gitterplatten (13, 14), die insbesondere aus Blei oder einer Bleilegierung bestehen, wobei die positiven und negativen Gitterplatten (13, 14) an wenigstens einem, insbesondere dem oberen Rand Anschlußfahnen (17, 18) besitzen sowie über diese jeweils elektrisch miteinander und mit wenigstens einem nach außen ragenden positiven bzw. negativen Pol (15, 16) verbunden sind, insbesondere nach einem der vorhergehenden Ansprüche,
**dadurch gekennzeichnet,**
daß die positiven und die negativen Gitterplatten (13, 14) aus beabstandeten, parallelen, geraden Stäben (34, 35) bestehen, und daß die aktive Masse (34, 35) wellenförmig auf die Gitterplatten (13, 14) aufgebracht ist, derart, daß im Bereich der Stäbe (34, 35) ein Wellenberg und zwischen je zwei Stäben (34, 35) ein Wellental befindet, wobei bevorzugt die positiven und negativen Gitterplatten (13, 14) um eine halbe Teilung gegeneinander versetzt sind, derart, daß die Wellenberge der positiven Masse (36) in die Wellentäler der benachbarten negativen Masse (37) zu liegen kommen und umgekehrt, und/oder die Stäbe (34, 35) derart versetzt zu einer vertikalen Mittelachse (38) angeordnet sind, daß durch Verschwenken einer Gitterplatte um 180° um die Mittelachse (38) wahlweise eine positive oder negative Gitterplatte (13, 14) gebildet werden kann.

10. Batterie nach einem der vorhergehenden Ansprüche,
**dadurch gekennzeichnet,**
daß die positiven und negativen Gitterplatten (13, 14) die gleiche Dicke aufweisen und - bis auf die Pastierung - strukturell gleich aufgebaut sind.
